# EUROPÄISCHE PATENTSCHRIFT

(11) **EP 1 084 788 B1**
(45) Veröffentlichungstag und Bekanntmachung des Hinweises auf die Patenterteilung: **23.11.2005**
(21) Anmeldenummer: 00119939.7
(22) Anmeldetag: 13.09.2000
(51) Int. Cl.: B23K 26/12, B23K 35/38

(54) **Verwendung eines Prozessgasgemisches zum Laserstrahlschweissen**
Use of a process gas mixture in laser beam welding
Utilisation d'un mélange de gaz de procédé dans le soudage par faisceau laser

(30) Priorität: 16.09.1999 DE 19944471
(43) Veröffentlichungstag der Anmeldung: 21.03.2001
(73) Patentinhaber: Linde AG, 65189 Wiesbaden (DE)
(72) Erfinder: Herrmann, Johann, 85716 Unterschleissheim (DE)
(74) Vertreter: Obermüller, Bernhard

(56) Entgegenhaltungen:
- WO-A-99/22901
- DE-A- 2 510 466
- DE-A- 19 616 844
- DE-C- 4 315 849
- US-A- 3 470 346
- US-A- 3 939 323
- US-A- 5 117 086

## Beschreibung

Die Erfindung betrifft die Verwendung eines Prozeßgasgemisches zum Laserstrahlschweißen, wobei das Prozeßgasgemisch zumindest ein Edelgas enthält.

Die Eigenschaften der Laserstrahlung, insbesondere die Intensität und gute Fokussierbarkeit, haben dazu geführt, daß Laser heute in vielen Gebieten der Materialbearbeitung zum Einsatz kommen. Die Laserbearbeitungsanlagen sind an sich bekannt. In der Regel weisen sie einen Laserbearbeitungskopf, gegebenenfalls mit einer zum Laserstrahl koaxial angeordneten Düse auf. Oftmals werden Laserbearbeitungsanlagen in Verbindung mit einer CNC-Steuerung eingesetzt.

Prozeßgase werden mit unterschiedlich Aufgaben, insbesondere auch als Schutzgase, bei zahlreichen Bearbeitungsverfahren eingesetzt, so auch beim Laserstrahlschweißen. Dabei wird angestrebt, die Gasgemische im Hinblick auf diese Aufgaben zu optimieren. Prozeßgase werden in der Regel an der oder zumindest in der Umgebung der Bearbeitungsstelle insbesondere in der Funktion als Schutzgase rein, d.h. ohne störende Bestandteile der umgebenden Atmosphäre benötigt.

Aus der DE 196 16 844 A1, die als nächstliegender Stand der Technik angesehen wird, ist ein Verfahren zum Laserschweißen von metallischen Werkstücken unter Einsatz eines die Schweißstelle umspülenden Prozeßgases aus einer Mischung aus wenigstens einem Inertgas und Wasserstoff bekannt. Das Prozeßgas enthält dabei als Inertgas wenigstens ein Edelgas und/oder Stickstoff. Im Prozeßgas ist Wasserstoff mit einem Anteil von 1 bis 30 Vol.-% enthalten. Als metallische Werkstücke sind Werkstücke aus austenitischem Stahl, aus austenitischferritischem Stahl oder aus einer Nickel-Basis-Legierung genannt. Die Wirkung des Wasserstoffzusatzes liegt nach der DE 196 16 844 A1 in der Verhinderung oder Verringerung der Plasmafackelbildung, d.h. einer Plasmabildung im Prozessgas bereits vor dem Auftreffen des Laserstrahls auf die Metalloberfläche.

Die US 3 470 346 beinhaltet ein Verfahren zum Lichtbogenschweißen mit einer hochlegierten, abschmelzenden Elektrode unter Schutzgas, welches sich aus Helium beziehungsweise Helium plus Neon, 0,5 bis 2 % Wasserstoff und restlich Argon zusammensetzt.

Die Zugabe eines elektronegativen Gases zu Helium oder einer Mischung mit Helium zum Laserschweißen beinhaltet die US 3 939 323. Die Zugabe von 10 % Wasserstoff führt zu einer hohen Eindringtiefe des Laserstrahls.

Aus der DE 43 15 849 C1 ist ein Verfahren zum CO₂-Laserstrahlschweißen von Aluminiumlegierungen unter Verwendung eines Schweißschutzgases oder -gasgemisches, das durch Schutz- und Arbeitsdüsen zur Plasmasteuerung auf den Schweißpunkt auf der Werkstückoberfläche gerichtet ist. Das Schweißschutzgas besteht aus entweder aus reinem Neon oder aus einem Gasgemisch aus Argon, Helium, Stickstoff, Kohlendioxid, Wasserstoff und Sauerstoff mit reinem Neon, wobei der Volumenanteil des reinen Neon in dem jeweiligen Gemisch mehr als 25 % beträgt.

Beim Laserstrahlschweißen wird mit Hilfe von Prozeßgasen vor allem eine Aufgabe bewältigt. Es muß bei hohen Laserleistungen verhindert werden, daß die Plasmabildung (abhängig von Laserleistung, Laserart, Energiedichte, vom verdampften Materialvolumen, von der Schweißgeschwindigkeit und auch von der Schutzgasart) zu groß wird. Ansonsten wird die Laserstrahlung durch das entstandene Plasma absorbiert, abgelenkt und/oder gestört, was zur Folge hat, daß der Schweißprozeß instabil wird oder sogar zusammenbricht. Kontrolle und vor allem bei hohen Laserleistungen Reduzierung des Plasma stellen die grundlegende Aufgabe des Prozeßgases dar. Vorteilhaft sind zur Lösung dieses Problems Gase wie Helium mit hoher Wärmeleitfähigkeit und hoher Ionisationstemperatur.

Es gibt aber noch andere Einflußmöglichkeiten auf den Schweißprozeß über die Auswahl des Prozeßgases. Mittels eines Gases kann die Schweißnaht abgedeckt und so vor schädlichen Einwirkungen durch die umgebende Atmosphäre geschützt werden (Schutzgas). Günstig sind hier geringe Strömungsgeschwindigkeiten und schwere Gase, die koaxial und/oder unter einem Winkel (z.B. ca. 30°) zur Laserstrahlachse zugeführt werden können.

Andere mögliche Aufgaben wie eine metalurgische Optimierung und/oder eine Maximierung der Geschwindigkeit und/oder der Qualität (Spritzer, Bohren, Nahtgeometrie) werden heute weitestgehend noch vernachlässigt. Außerdem spielt der Preis des verwendeten Prozeßgase bei deren Auswahl eine nicht unbedenkliche Rolle.

Beim Schweißen von Edelstählen sind die wichtigsten Aufgaben, welche bei einer Optimierung des Schweißprozesses durch Auswahl des Prozeßgases zu erfüllen sind, die Oxidfreiheit, die Plasmakontrolle, die Schweißgeschwindigkeit und die Einschweißtiefe. Die grundsätzlich einsetzbaren Gase bieten hierbei unter jedem Gesichtspunkt unterschiedlich gute Voraussetzungen.

Es besteht insbesondere für das Laserstrahlschweißen von Edelstählen - besonders beim Laserstrahlschweißen von austenitischen Stählen -, aber auch bei dem Laserstrahlschweißen von Titan oder von titanstabilisierten Stählen das Problem, geeignete Zusammensetzungen für Prozeßgasgemische zu finden, die zu einer Optimierung des Schweißprozesses führen.

Der vorliegenden Erfindung liegt daher die Aufgabe zugrunde, eine Verwendung eines Prozeßgasgemiches zum Laserstrahlschweißen der eingangs genannten Art aufzuzeigen, bei welchen der Laserbearbeitungsprozeß durch eine geeignete Gaszusammensetzung verbessert und optimiert wird. Dabei sollte möglichst auch die Wirtschaftlichkeit berücksichtigt werden.

Diese Aufgabe wird erfindungsgemäß dadurch gelöst, daß das Prozessgas zumindest ein Edelgas enthält, bestehend aus
- 20 bis 50 Vol.-% Helium und/oder Neon, 50 vpm (0,005 Vol.-%) bis 15,0 Vol.-% Wasserstoff und restlich Argon
   oder
- 20 bis 50 Vol.-% Helium und/oder Neon, 50 vpm (0,005 Vol.-%) bis 15,0 Vol.-% Wasserstoff und restlich Stickstoff
verwendet wird.

Wasserstoff kann dem Plasma sehr gut Energie entziehen, weil es eine hohe Wärmekapazität und Wärmeleitfähigkeit hat. Allerdings bildet es schon bei niedrigen Temperaturen (bei ca. 4.000 °C) ein Plasma. Es hat sich gezeigt, daß Prozeßgasgemische mit einem erfindungsgemäßen Wasserstoffanteil zu guten Schweißergebnissen führen. Wasserstoff kann dazu beitragen, Sauerstoff zu binden und damit die Oxidation zu minimieren. Ferner kann durch eine Zugabe von Wasserstoff im Prozeßgas eine Geschwindigkeitssteigerung beim Laserstrahlschweißen erreicht werden. Eine Begrenzung des Wasserstoffanteils im Prozeßgasgemisch wird ferner auch aus Sicherheitsgründen empfohlen, da es bei höhern Wasserstoffanteilen zur Entzündung kommen kann.

Bevorzugt wird ein ein temäres, quatemäres oder höherkomponentiges bevorzugt Wasserstoff und Helium und/oder Neon umfassendes Gasgemisch eingesetzt.

Helium kann das Plasma am besten verdünnen und damit kontrollieren, weil es bei Helium erst bei Temperaturen zwischen 15.000 °C und 20.000 °C zu einer Plasmabildung kommt. Das preisgünstigere Argon entfaltet im Hinblick auf das Plasma eine geringere Wirkung als das Helium. Argon kann insbesondere bei hochreaktiven Metallen wie Titan oder titanstabilisierten Stählen eingesetzt werden. Neon liegt bei seinen physikalischen und chemischen Eigenschaften zwischen Helium und Argon.

Insbesondere kann das Prozeßgas 5 bis 75 Vol.-%, vorzugsweise 15 bis 50 Vol.-%, besonders bevorzugt 20 bis 35 Vol.-%, Helium enthalten.

Vorteile beim Laserstrahlschweißen sind auch zu erzielen, wenn das Prozeßgas insbeondere 10 bis 80 Vol.-%, vorzugsweise 20 bis 60 Vol-%, besonders bevorzugt 25 bis 45 Vol.-%, Neon enthält.

Helium und Neon enthaltende Prozeßgasgemische sind ebenfalls geeignet. Das Prozeßgas kann dabei einen Gesamtanteil an Helium und Neon von 5 bis 80 Vol.-%, vorzugsweise von 15 bis 60 Vol.-%, besonders bevorzugt von 20 bis 45 Vol.-%, aufweisen.

Vorteilhafterweise kann das Prozeßgas Stickstoff enthalten.

Der ebenfalls preisgünstige Stickstoff wirkt hinsichtlich der Plasmakontrolle vergleichbar wie Argon. Allerdings ist eine Verwendung von stickstoffhaltigen Prozeßgasgemischen beim Schweißen hochreaktiver Metalle wie beispielsweise Titan oder titanstabilisierten Stählen zu vermeiden, da es hier zu Nitritbildungen kommen kann.

Es hat sich gezeigt, daß eine Optimierung hinsichtlich der verschiedenen Aufgaben des Prozeßgases hervorragend über die Zusammensetzung der Prozeßgasgemische erreichen läßt.

In Ausgestaltung der Erfindung werden aufgrund ihrer hervorragenden Eignung zum Laserstrahlschweißen ternäre oder quaternäre Prozeßgasgemische empfohlen.

Das ternäre Prozeßgasgemisch kann sich dabei insbesondere aus
- Helium, Wasserstoff und Stickstoff,
- Helium, Wasserstoff und Argon,
- Neon, Wasserstoff und Stickstoff oder
- Neon, Wasserstoff und Argon
zusammensetzen.

Das quaternäre Prozeßgasgemisch kann sich dabei insbesondere aus
- Helium, Neon, Wasserstoff und Stickstoff,
   oder
- Helium, Neon, Wasserstoff und Argon
zusammensetzen.

Bei den aufgezählten ternären und quaternären Gemischen kann der Wasserstoffanteil auch zwischen 0,01 und 5,0 Vol.-% oder sogar zwischen 0,5 und 4,5 Vol.-% liegen.

Zum Laserstrahlschweißen von austenitischen Stählen wird erfindungsgemäß die Verwendung eines Prozeßgasgemisches empfohlen, das aus Helium und/oder Neon und zusätzlich Stickstoff besteht. Zum Laserstrahlschweißen von Titan oder titanstabilisierten Stählen wird erfindungsgemäß die Verwendung eines Prozeßgasgemisches empfohlen, das Helium und/oder Neon und zusätzlich Wasserstoff und Argon enthält.

Beim Laserstrahlschweißen von austenitischen Stählen, von Titan oder von titanstabilisierten Stählen liegt der Heliumanteil in ternären Gemischen bevorzugt bei ca. 25 Vol-%. Bei einer teilweisen oder vollständigen Substitution des Heliums durch Neon ist der Anteil entsprechend höher als der Heliumanteil anzusetzen.

Die aufgezeigten Prozeßgasgemische können mit Vorteil in einem Verfahren zum Laserstrahlschweißen insbesondere zum Schweißen von Edelstählen oder von Titan oder titanstabilisierten Stählen eingesetzt werden. Dabei wird ein fokussierter Laserstrahl auf die zu bearbeitende Werkstückoberfläche geführt und zumindest ein Prozeßgasstrom über mindestens eine zur Laserstrahlachse koaxial oder unter einem Winkel angeordnete Düse gegen die Werkstückoberfläche geleitet.

Unter einem fokussierten Laserstrahl wird im Rahmen der Erfindung ein im wesentlichen auf die Werkstückoberfläche fokussierter Laserstrahl verstanden. Außer bei der überwiegend eingesetzten Methode mit auf die Werkstückoberfläche fokussierter Laserstrahlung kann die Erfindung auch bei der selten benutzten Variante mit nicht exakt auf die Werkstückoberfläche fokussierter Strahlung Anwendung finden.

Die Erfindung ist grundsätzlich nicht auf den Einsatz von speziellen Arten von Lasern beschränkt. Vor allem eignen sich für das Laserstrahlschweißen CO₂-Laser oder Nd:YAG-Laser.

## Patentansprüche

1. Verwendung eines Prozeßgasgemisches zum Laserstrahlschweißen, wobei das Prozessgasgemisch zumindest ein Edelgas enthält, bestehend aus
• 20 bis 50 Vol.-% Helium und/oder Neon, 50 vpm (0,005 Vol.-%) bis 15,0 Vol.-% Wasserstoff und restlich Argon
oder
• 20 bis 50 Vol.-% Helium und/oder Neon, 50 vpm (0,005 Vol.-%) bis 15,0 Vol.-% Wasserstoff und restlich Stickstoff.

## Claims

1. Use of a process gas mixture for laser beam welding, the process gas mixture containing at least one noble gas, consisting of
• 20 to 50% by volume of helium and/or neon, 50 vpm (0.005% by volume) to 15.0% by volume of hydrogen, remainder argon
or
• 20 to 50% by volume of helium and/or neon, 50 vpm (0.005% by volume) to 15.0% by volume of hydrogen, remainder nitrogen.

## Revendications

1. Utilisation d'un mélange de gaz de procédé pour la soudure au rayon laser, dans laquelle le mélange de gaz de procédé contient au moins un gaz noble qui est constitué de :
- 20 à 50 % en volume d'hélium et/ou de néon et de 50 vpm (0,005 % en volume) à 15,0 % en volume d'hydrogène, le solde étant de l'argon
ou
- 20 à 50 % en volume d'hélium et/ou de néon, de 50 vpm (0,005 % en volume) à 15,0 % en volume d'hydrogène, le solde étant de l'azote.
